# EUROPÄISCHE PATENTSCHRIFT

(11) **EP 1 894 541 B1**
(45) Veröffentlichungstag und Bekanntmachung des Hinweises auf die Patenterteilung: **20.03.2013**
(21) Anmeldenummer: 06119671.3
(22) Anmeldetag: 29.08.2006
(51) Int. Cl.: A61C 8/00

(54) **Aufbaupfosten für ein Dentalimplantat**
Abutment for a dental implant
Pilier pour un implant dentaire

(43) Veröffentlichungstag der Anmeldung: 05.03.2008
(60) Teilanmeldung: 10187356.0
(73) Patentinhaber: Straumann Holding AG, 4002 Basel (CH)
(72) Erfinder: Zettler, Marc, 79618, Rheinfelden/Baden (DE); Schürch, Hans, 4425, Titterten (CH)
(74) Vertreter: Modiano, Micaela Nadia

(56) Entgegenhaltungen:
- WO-A2-01/49199
- DE-A1- 19 607 427
- DE-C1- 19 534 979
- US-A1- 2004 101 808

## Beschreibung

Die vorliegende Erfindung betrifft allgemein einen Aufbaupfosten für ein Dentalimplantat und insbesondere einen Aufbaupfosten für ein Dentalimplantat mit einem verbesserten okklusalen Teil.

### Stand der Technik

Aus der US-A-5 674 069 ist ein patientenspezifisch ausgeführter Aufbaupfosten (Abutment) bekannt, der okklusal einen asymmetrischen Kegelstumpf aufweist.

Aus der EP-A-808 608 ist ein Aufbaupfosten für Zahnimplantate bekannt, wobei ein apikaler Abschnitt des sich aus dem enossalen Teil des Zahnimplantats erstreckenden Aufbaupfostens in Form eines symmetrischen Kegelstumpfs ausgebildet ist, dem sich ein weiter koronal liegender Abschnitt des Aufbaupfostens anschließt, der asymmetrisch ausgebildet ist. Insbesondere weist der letztere Abschnitt des Aufbaupfostens lingual eine parabelförmige Grundfläche und labial eine halbelliptische Grundfläche auf.

Durch diese Asymmetrie soll in der EP-A-808 608 weitestgehend im Bereich der Mundhöhle eine Anpassung an die Form der natürlichen Zähne realisiert werden. In der Praxis hat sich jedoch erwiesen, dass diese Beschränkung auf zwei Grundflächen nicht der Komplexität der Formen der natürlichen Zähne gerecht wird.

Darüber hinaus erfordert die EP-A-808 608, dass ein gleichmäßig breiter Absatz zwischen einem okklusal liegenden Kegelstumpf des Aufbaupfostens und dem Rand der unterschiedlich gestalteten Grundflächen vorliegt, was bei den geringen Abmessungen des Absatzes in der Größenordnung bis 0,1 mm ein Problem in der Herstellung des Aufbaupfostens darstellt.

WO 01/49199 A2 offenbart in Verbindung mit der Ausführungsform der Fig. 5C einen Aufbaupfosten mit einem nicht rundsymmetrischen okklusalen Teil und mit einem ungleichmäßigen breiten Absatz.

### Zusammenfassung der Erfindung

Daher ist es eine Aufgabe der vorliegenden Erfindung einen Aufbaupfosten für ein Dentalimplantat bereitzustellen, der die obigen Probleme vermeidet.

Im Rahmen dieser Aufgabe besteht eine besondere Aufgabe der vorliegenden Erfindung darin, einen Aufbaupfosten für ein Dentalimplantat zu realisieren, der einer Vielzahl von Formen der natürlichen Zähne gerecht wird.

Zusätzlich besteht eine besondere Aufgabe der vorliegenden Erfindung in der Bereitstellung eines Aufbaupfostens für ein Dentalimplantat, der leichter, ohne Einhaltung der Bedingung eines gleichmäßig breiten Absatzes zwischen einem okklusal liegenden Kegelstumpf des Aufbaupfostens und dem Rand der Grundflächen herstellbar ist.

Diese und weitere der nachfolgenden Beschreibung zu entnehmenden Aufgaben werden von einem Aufbaupfosten für ein Dentalimplantat gemäß den anliegenden Ansprüchen gelöst.

Weitere Merkmale und Vorteile der vorliegenden Erfindung sowie die Wirkungsweise der exemplarischen Ausführungsform der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Dabei zeigen:
Fig. 1A eine interdentale oder approximale Ansicht eines Aufbaupfostens gemäß
   einer ersten Ausführungsform der Erfindung;
Fig. 1B eine Draufsicht des Aufbaupfostens der Fig. 1A;
Fig. 1C eine Ansicht von der labialen Seite des Aufbaupfostens der Fig. 1A;
Fig. 1D eine Schnittansicht entlang der Linie A-A der Fig. 1C;
Fig. 2A eine interdentale oder approximale Ansicht eines Aufbaupfostens gemäß
   einer zweiten Ausführungsform der Erfindung;
Fig. 2B eine Draufsicht des Aufbaupfostens der Fig. 2A;
Fig. 2C eine Ansicht von der labialen Seite des Aufbaupfostens der Fig. 2A;
Fig. 2D eine Schnittansicht entlang der Linie A-A der Fig. 2C;
Fig. 3A eine interdentale oder approximale Ansicht eines Aufbaupfostens gemäß
   einer dritten Ausführungsform der Erfindung;
Fig. 3B eine Draufsicht des Aufbaupfostens der Fig. 3A;
Fig. 3C eine Ansicht von der labialen Seite des Aufbaupfostens der Fig. 3A;
Fig. 3D eine Schnittansicht entlang der Linie A-A der Fig. 3C;
Fig. 4A eine interdentale oder approximale Ansicht eines Aufbaupfostens gemäß
   einer vierten Ausführungsform der Erfindung;
Fig. 4B eine Draufsicht des Aufbaupfostens der Fig. 2A;
Fig. 4C eine Ansicht von der labialen Seite des Aufbaupfostens der Fig. 4A;
Fig. 4D eine Schnittansicht entlang der Linie A-A der Fig. 4C;
Fig. 5A eine interdentale oder approximale Ansicht eines Aufbaupfostens gemäß einer fünften Ausführungsform der Erfindung;
Fig. 5B eine Draufsicht des Aufbaupfostens der Fig. 5A;
Fig. 5C eine Ansicht von der labialen Seite des Aufbaupfostens der Fig. 5A;
Fig. 5D eine Schnittansicht entlang der Linie A-A der Fig. 5C;
Fig. 6A eine interdentale oder approximale Ansicht eines Aufbaupfostens gemäß
   einer sechsten Ausführungsform der Erfindung;
Fig. 6B eine Draufsicht des Aufbaupfostens der Fig. 6A;
Fig. 6C eine Ansicht von der labialen Seite des Aufbaupfostens der Fig. 6A;
Fig. 6D eine Schnittansicht entlang der Linie A-A der Fig. 6C; und
Fig. 6E ist eine Variante der Draufsicht der Fig. 6B.

### Beschreibung der bevorzugten Ausführungsformen der Erfindung

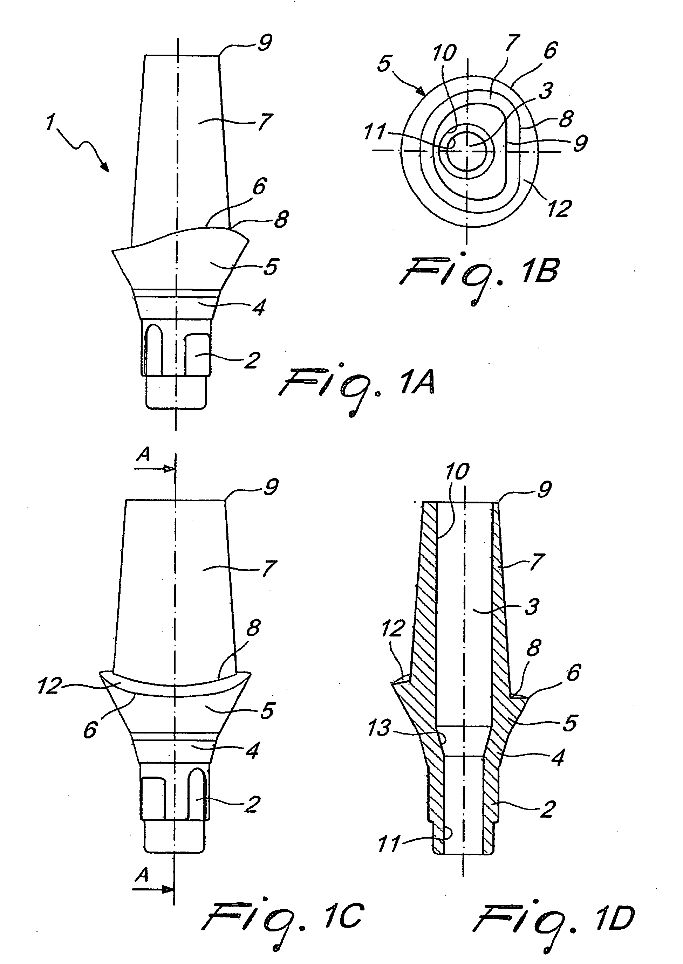

Unter Bezugnahme auf die Figuren 1A bis 1D wird eine erste Ausführungsform des Aufbaupfostens für ein Dentalimplantat gemäß der vorliegenden Erfindung beschrieben. Der mit dem Bezugszeichen 1 allgemein gekennzeichnete Aufbaupfosten (Abutment) verfügt über ein Basisteil 2, das zur Aufnahme in ein Implantat (nicht gezeigt) ausgebildet ist. Wie dem einschlägigen Fachmann bekannt, weist das Basisteil 2 profilierte Abschnitte zur Rotationssicherung des Aufbaupfostens 1 im Implantat auf. Darüber hinaus ist der Aufbaupfosten 1, wie im Fachgebiet wohl bekannt, mit einer durchgehenden Bohrung 3 ausgestattet, die zur Aufnahme einer (ebenfalls nicht gezeigten) Schraube zur Sicherung des Aufbaupfostens an das Implantat ausgebildet ist.

An das Basisteil 2 des Aufbaupfostens 1 schließt ein rotationssymmetrisches Übergangsteil 4 an, das vorzugsweise als Kegelstumpf ausgebildet ist.

Das Übergangsteil 4 geht in einen Abschnitt 5 über, der in der approximalen Ansicht einen wellenförmigen oberen Rand 6 aufweist, mit einem Scheitel im approximalen Bereich und jeweiligen Sohlen im lingualen bzw. labialen Bereich. Die Sohle des labialen Bereichs liegt, wie aus Fig. 1A ersichtlich, etwas tiefer als die Sohle des lingualen Bereichs, um somit eine morphologieabhängige Anpassung des Aufbaupfosten zu erzielen.

Erfindungsgemäß ist der an den Abschnitt 5 anschließende okklusale Teil 7 des Aufbaupfostens 1 nicht rundsymmetrisch ausgebildet, wobei zwischen dem oberen Rand 6 des Abschnitts 5 und dem unteren Rand 8 des okklusalen Teils 7, wie aus der Fig. 1B ersichtlich, ein ungleichmäßig breiter Absatz 12 vorhanden ist. Somit ist es möglich, den okklusalen Teil 7 mit einer abweichenden Querschnittsgeometrie von der des Abschnitts 5 zu gestalten, um eine bessere Anpassung an die Morphologie des Mundes zu erzielen.

Die gegenwärtigen Erfinder haben überraschender Weise festgestellt, dass trotz der ungleichmäßigen Ausbildung des Absatzes 12 gute Ergebnisse in der Integration und Einheilung der Implantat-basierenden Versorgung erreicht werden, wobei die Herstellung des Aufbaupfostens 1 mit dem nichtrotationssymmetrischem okklusalen Teil 7 wegen des Wegfalls des Erfordernisses der Gleichmäßigkeit des Absatzes 12 erleichtert wird. In der Praxis hat sich erwiesen, dass Variationen von etwa 20% bis zu etwa 300% in der Breite des Absatzes 12, die in der Größenordnung von 0,1 bis 1 mm liegen, akzeptabel sind. Daher ist erfindungsgemäß der vorstehende Bereich umfasst. Zum Beispiel liegt in der ersten Ausführungsform die Variation bei etwa 75%.

Der okklusale Teil 7 ist kegelstumpfförmig ausgebildet, wobei der untere Rand 8 davon im wesentlichen parallel zum oberen Rand 9 verläuft. Erfindungsgemäß ist der lingual zugewandte Bereich des okklusalen Teils 7 flach ausgebildet und verläuft, wie in der Draufsicht der Fig. 1B gezeigt, nahezu geradlinig, wohingegen der labial zugewandte Bereich sowie die approximalen Bereiche des okklusalen Teils 7 abgerundet sind. Somit können erfindungsgemäß eine bessere Anpassung an die Morphologie des Mundes erzielt und gleichzeitig ein für die Vorfertigung in größeren Stückzahlen geeigneter Aufbaupfosten ermöglicht werden.

Die durchgehende Bohrung 3 weist im okklusalen Teil 7 einen Abschnitt 10 auf mit einem größeren Durchmesser als der Abschnitt 11 der durchgehenden Bohrung 3 im Basisteil 2, wobei im Übergangsteil 4 die durchgehende Bohrung 3 einen kegelstumpfförmigen Abschnitt 13 hat. Dieser Abschnitt dient als Auflagefläche des Schraubenkopfes bei der Fixierung des Aufbaupfostens im Implantat.

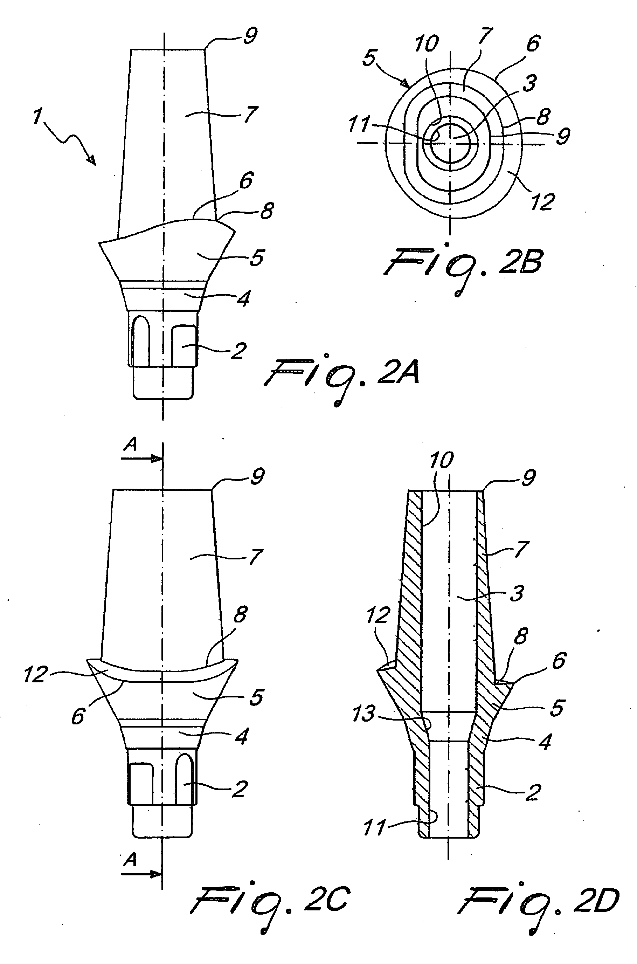

Unter Bezugnahme auf die Figuren 2A bis 2D wird eine zweite Ausführungsform des Aufbaupfostens für ein Dentalimplantat gemäß der vorliegenden Erfindung beschrieben. In dieser zweiten Ausführungsform werden gleiche Bezugszeichen wie in den Figuren der ersten Ausführungsform zur Kennzeichnung gleicher Teile verwendet.

Abweichend von der ersten Ausführungsform ist in der zweiten der labial zugewandte Bereich des okklusalen Teils 7 flach ausgebildet und verläuft, wie in der Draufsicht der Fig. 2B gezeigt, nahezu geradlinig, wohingegen der lingual zugewandte Bereich sowie die approximalen Bereiche des okklusalen Teils 7 abgerundet sind, um somit eine morphologieabhängige Anpassung des Implantats zu erzielen. Auch bei der zweiten Ausführungsform liegt die Variation der Breite des Absatzes 12 bei etwa 75%.

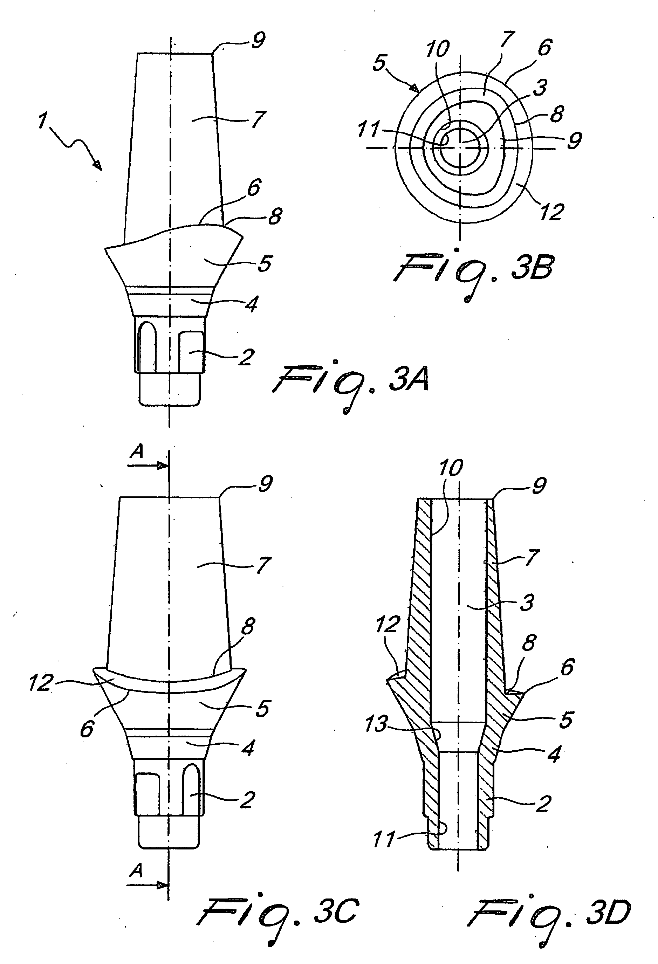

Unter Bezugnahme auf die Figuren 3A bis 3D wird eine dritte Ausführungsform des Aufbaupfostens für ein Dentalimplantat gemäß der vorliegenden Erfindung beschrieben. In dieser dritten Ausführungsform werden gleiche Bezugszeichen wie in den Figuren der ersten oder zweiten Ausführungsform zur Kennzeichnung gleicher Teile verwendet.

Abweichend von der ersten Ausführungsform ist in der dritten der okklusale Teil 7 im wesentlichen mit einem dreieckigen Querschnitt ausgebildet, wobei die Spitzen und die Seiten des Dreiecks abgerundet sind. Wie in der Fig. 3B zu sehen, ist der lingual zugewandte Bereich des okklusalen Teils 7 durch eine Seite des Dreiecks gebildet, so dass diese ähnlich der ersten Ausführungsform flach verläuft. Hingegen sind der labial zugewandte Bereich sowie die approximalen Bereiche des okklusalen Teils 7 eher abgerundet. Auch bei der dritten Ausführungsform liegt die Variation der Breite des Absatzes 12 bei etwa 75%.

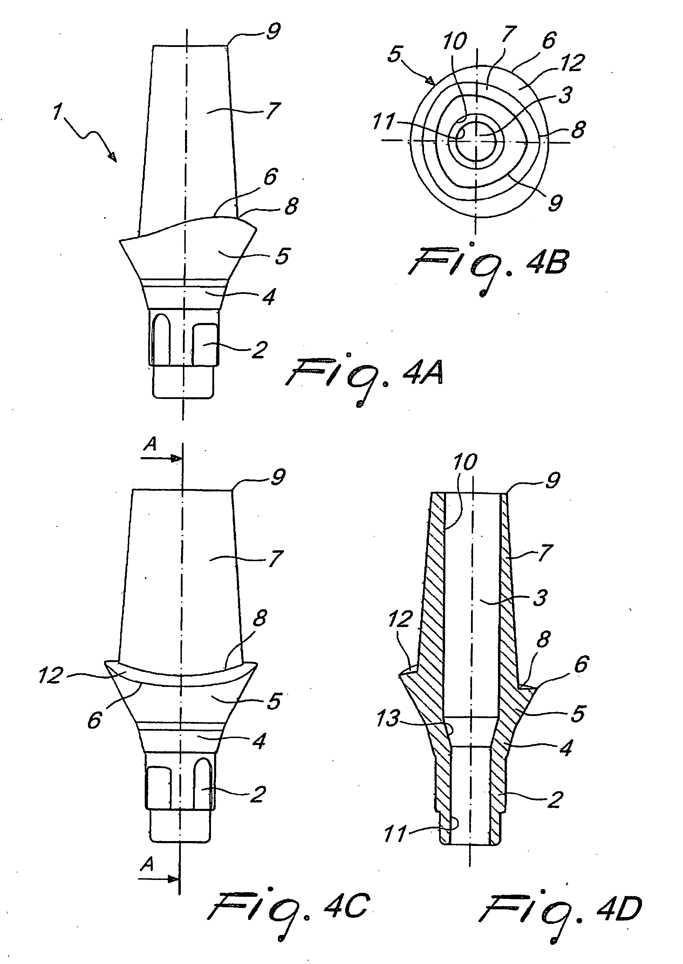

Unter Bezugnahme auf die Figuren 4A bis 4D wird eine vierte Ausführungsform des Aufbaupfostens für ein Dentalimplantat gemäß der vorliegenden Erfindung beschrieben. In dieser vierten Ausführungsform werden gleiche Bezugszeichen wie in den Figuren der ersten, zweiten oder dritten Ausführungsform zur Kennzeichnung gleicher Teile verwendet.

Abweichend von der dritten Ausführungsform ist in der vierten der labial zugewandte Bereich des okklusalen Teils 7 flach ausgebildet und verläuft, wie in der Draufsicht der Fig. 4B gezeigt, nahezu geradlinig, wohingegen der lingual zugewandte Bereich sowie die approximalen Bereiche des okklusalen Teils 7 abgerundet sind, um somit eine morphologieabhängige Anpassung des Implantats zu erzielen. Bei der vierten Ausführungsform liegt die Variation der Breite des Absatzes 12 bei etwa 150%.

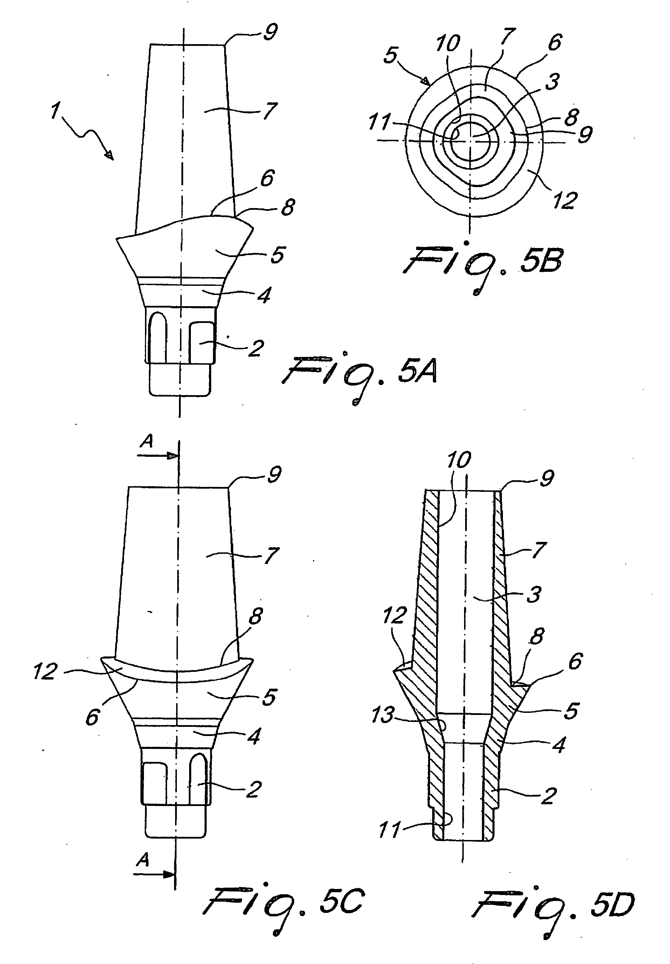

Unter Bezugnahme auf die Figuren 5A bis 5D wird eine fünfte Ausführungsform des Aufbaupfostens für ein Dentalimplantat gemäß der vorliegenden Erfindung beschrieben. In dieser fünften Ausführungsform werden gleiche Bezugszeichen wie in den Figuren der ersten, zweiten, dritten oder vierten Ausführungsform zur Kennzeichnung gleicher Teile verwendet.

Abweichend von der ersten Ausführungsform ist in der fünften der okklusale Teil 7 im wesentlichen mit einem viereckigen Querschnitt ausgebildet, wobei die Spitzen und die Seiten des Vierecks gerundet sind. Bei der fünften Ausführungsform liegt die Variation der Breite des Absatzes 12 bei etwa 30%.

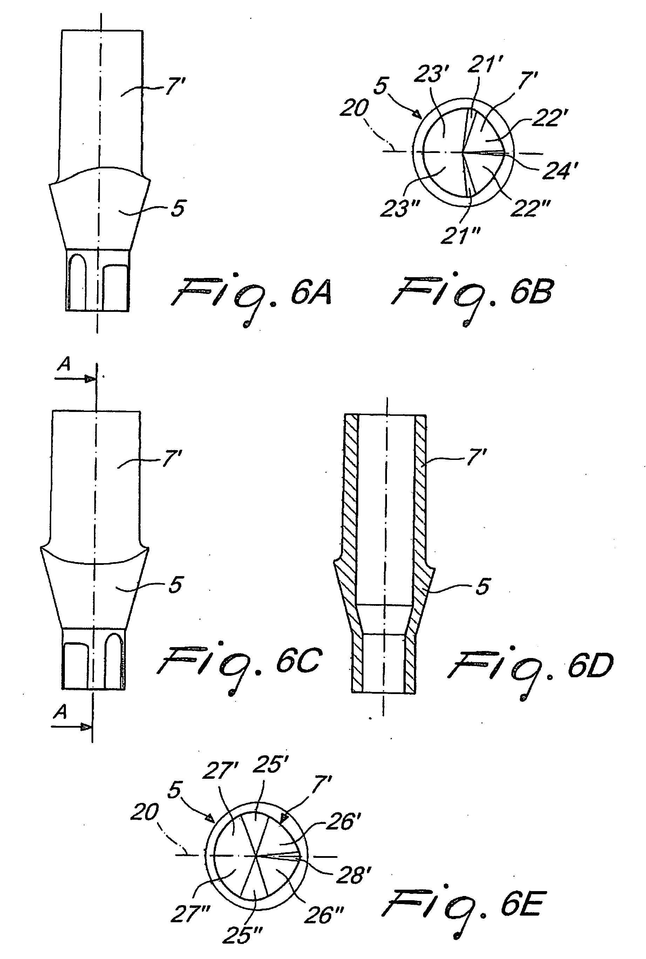

Unter Bezugnahme auf die Figuren 6A bis 6E wird eine sechste Ausführungsform des Aufbaupfostens für ein Dentalimplantat gemäß der vorliegenden Erfindung beschrieben. In dieser sechsten Ausführungsform werden gleiche Bezugszeichen wie in den Figuren der ersten, zweiten, dritten, vierten oder fünften Ausführungsform zur Kennzeichnung gleicher Teile verwendet.

Abweichend von den vorstehenden Ausführungsformen ist in der sechsten der okklusale Teil 7' als Zylinder ausgebildet.

Darüber hinaus setzt sich der Querschnitt des Zylinders, wie aus den Darstellungen der Figuren 6B und 6E ersichtlich, worin zur Vereinfachung das durchgehende Loch weggelassen ist, aus einer Vielzahl von Kreisbögen 21', 21", 22' 22", 23', 23" und 24' bzw, 25', 25", 26', 26", 27', 27" und 28' mit unterschiedlichen Radien, wobei die an der Symmetrieachse 20 gegenüberstehenden Kreisbögen paarweise gleiche Radien haben.

Bei der sechsten Ausführungsform liegt die Variation der Breite des Absatzes 12 bei etwa 45%.

## Patentansprüche

1. Aufbaupfosten für ein Dentalimplantat, der folgendes umfasst:
ein mit profilierten Abschnitten versehenes apikales Basisteil (2), ein an das Basisteil (2) koronal anschließendes rotationssymmetrisches Übergangsteil (4),
einen an das Übergangsteil (4) koronal anschließenden Abschnitt (5), der mit einem wellenförmigen Rand (6) versehen ist, und
ein an das Übergangsteil (4) koronal anschließendes okklusales Teil (7),
wobei das okklusale Teil (7) nicht rundsymmetrisch ausgebildet, und dass
zwischen dem oberen Rand (6) des Abschnitts (5) und dem unteren Rand (8) des okklusalen Teils (7) ein ungleichmäßig breiter Absatz (12) gebildet ist, **dadurch gekennzeichnet, dass** die Variation der Breite des Absatzes (12) zwischen 30% und 150%
liegt.

2. Aufbaupfosten nach Anspruch 1, wobei die Variation der Breite des Absatzes (12) zwischen 30% und 75% liegt.

3. Aufbaupfosten nach Anspruch 1, wobei die Variation der Breite des Absatzes (12) zwischen 45% und 75% liegt.

4. Aufbaupfosten nach einem oder mehreren der Ansprüche 1-3, wobei der okklusale Teil (7) als Kegelstumpf ausgebildet ist.

5. Aufbaupfosten nach einem oder mehreren der Ansprüche 1-3, wobei der okklusale Teil (7) als Zylinder ausgebildet ist.

6. Aufbaupfosten nach Anspruch 5, wobei der Querschnitt des Zylinders aus einer Vielzahl von Kreisbögen (21', 21", 22' 22", 23', 23"; 24', 25', 25", 26', 26", 27', 27" 28') mit unterschiedlichen Radien gebildet ist, wobei vorzugsweise gegenüberstehenden Kreisbögen paarweise gleiche Radien haben.

7. Aufbaupfosten nach einem oder mehreren der Ansprüche 1-6, wobei das Übergangsteil (4) als rotationssymmetrischer Kegelstumpf ausgebildet ist.

8. Aufbaupfosten nach einem oder mehreren der Ansprüche 1-7, wobei der obere Rand (6) des Abschnitts (5) wellenförmig ausgebildet ist, mit einem Scheitel im approximalen Bereich und jeweiligen Sohlen im lingualen bzw. labialen Breich.

9. Aufbaupfosten nach Anspruch 8, wobei die Sohle des lingualen Bereichs etwas höher liegt als die Sohle des labialen Bereich.

## Claims

1. Abutment for a dental implant, comprising:
an apical base part (2) provided with profiled portions,
a rotationally-symmetrical transition part (4) coronally neighboring on the base part (2),
a section (5) coronally neighboring on the transition part (4), which is provided with an undulating rim (6), and
an occlusal part (7) coronally neighboring on the transition part (4),
where the occlusal part (7) is not circular symmetric and where between the upper rim (6) of the section (5) and the lower rim (8) of the occlusal part (7), an irregularly wide ledge (12) is formed,
**characterized in that** the variation of the width of the ledge (12) is between 30% and 150%.

2. Abutment according to Claim 1, where the variation in width of the ledge (12) lies between 30% and 75%.

3. Abutment according to Claim 1, where the variation in width of the ledge (12) lies between 45% and 75%.

4. Abutment according to one or more of Claims 1-3, where the occlusal part (7) is embodied as truncated cone.

5. Abutment according to one or more of Claims 1-3, where the occlusal part (7) is embodied as a cylinder.

6. Abutment according to Claim 5, where the cross-section of the cylinder is formed by a plurality of circular arcs (21', 21", 22', 22", 23', 23", 29', 25', 25", 26', 26", 27', 27", 28') with different radii, with opposite circular arcs preferably having equal radii in pairs.

7. Abutment according to one or more of Claims 1-6, where the transition part (4) is embodied as a rotationally symmetrical truncated cone.

8. Abutment according to one or more of Claims 1-7, where the upper rim (6) of portion (5) is formed undulating, with a crest in the approximal portion and respective bases in the lingual and labial portions, respectively.

9. Abutment according to Claim 8, where the base of the lingual portion is slightly higher than the base of the labial portion.

## Revendications

1. Pilier pour un implant dentaire, comportant les éléments suivants :
une partie de base apicale (2) munie de sections profilées,
une partie de transition (4) à symétrie de rotation bordant la partie de base (2) de manière coronale,
une section (5) bordant la partie de transition (4) de manière coronale et munie d'un bord (6) de forme ondulée, et
une partie occlusale (7) bordant la partie de transition (4) de manière coronale,
dans lequel la partie occlusale (7) est formée de manière symétrique non circulaire, et qu'un épaulement (12) de largeur irrégulière est formé entre le bord supérieur (6) de la section (5) et le bord inférieur (8) de la partie occlusale (7),
**caractérisé en ce que** la variation de la largeur de l'épaulement (12) est comprise entre 30 % et 150 %.

2. Pilier selon la revendication 1, dans lequel la variation de la largeur de l'épaulement (12) est comprise entre 30 % et 75 %.

3. Pilier selon la revendication 1, dans lequel la variation de la largeur de l'épaulement (12) est comprise entre 45 % et 75 %.

4. Pilier selon l'une quelconque ou plusieurs des revendications 1 à 3, dans lequel la partie occlusale (7) est configurée sous la forme d'un cône tronqué.

5. Pilier selon l'une quelconque ou plusieurs des revendications 1 à 3, dans lequel la partie occlusale (7) est configurée sous la forme d'un cylindre.

6. Pilier selon la revendication 5, dans lequel la section transversale du cylindre est formée à partir d'une pluralité d'arcs de cercle (21', 21", 22', 22", 23', 23" ; 24', 25', 25", 26', 26", 27', 27", 28') avec différents rayons, dans lequel chaque paire d'arcs de cercle de préférence opposés l'un à l'autre a des rayons identiques.

7. Pilier selon l'une quelconque ou plusieurs des revendications 1 à 6, dans lequel la partie de transition (4) est configurée sous la forme d'un cône tronqué à symétrie de rotation.

8. Pilier selon l'une quelconque ou plusieurs des revendications 1 à 7, dans lequel le bord supérieur (6) de la section (5) est configuré sous forme ondulée, avec un sommet dans la région proximale et des semelles respectives dans la région linguale ou labiale.

9. Pilier selon la revendication 8, dans lequel la semelle de la région linguale est légèrement plus haute que la semelle de la région labiale.
